# EUROPÄISCHE PATENTANMELDUNG

(11) **EP 4 534 859 A1**
(43) Veröffentlichungstag der Anmeldung: **09.04.2025**
(21) Anmeldenummer: 24201099.9
(22) Anmeldetag: 18.09.2024
(51) Int. Cl.: F16B 3/06, F16B 37/04

(54) **SCHRAUBE, EXPANDERSYSTEM, FAHRRADROHRSYSTEM UND FAHRRADBELEUCHTUNG**

(30) Priorität: 05.10.2023 DE 202023105764 U
(71) Anmelder: Canyon Bicycles GmbH, 56073 Koblenz (DE)
(72) Erfinder: Faucher, Mathis, 34380 Argelliers (FR); de Marne, Pierre, 74190 Plateau d'Assy (FR); Oppermann, Philip, 53111 Bonn (DE); Kohl, Wolfgang, 91126 Schwabach (DE)
(74) Vertreter: dompatent von Kreisler Selting Werner - Partnerschaft von Patent- und Rechtsanwälten mbB

(57) **Zusammenfassung**

Eine Schraube (10), mit einem Schraubenkörper (12), und einer sich axial durch den Schraubenkörper (12) erstreckenden Durchführungsöffnung (14), wobei der Schraubenkörper (12) eine kegelförmige Außenfläche (16) aufweist. Ferner umfasst die Erfindung ein Expandersystem (100), ein Fahrradrohrsystem (1000) und eine Fahrradbeleuchtung (1002).

## Beschreibung

Die Erfindung betrifft eine Schraube, ein Expandersystem, ein Fahrradrohrsystem und eine Fahrradbeleuchtung.

Insbesondere im Fahrradbereich existieren Ansätze Elemente, bspw. Elektronik, innerhalb von Rohren, vorzugsweise Fahrradrohren anzuordnen.

So können bspw. GPS-Tracker innerhalb des Steuerrohrs, des Lenkerrohrs und/oder der Sattelstütze angeordnet werden.

Ferner existieren Konzepte Beleuchtungsvorrichtungen innerhalb der Rohre anzuordnen. Ein derartiges System ist bspw. in 20 2023 103 797.6 beschrieben.

Eine Herausforderung hierbei ist die Fixierung der Elemente innerhalb der Rohre. So kann ein loses Anordnen der Elemente z. B. zu Beschädigungen der Elemente und/oder der Rohre und/oder weiterer dort angeordneter Komponenten, wie bspw. Kabeln führen. Weitergehend sind existierende Fixierungskonzepte umständlich.

Problematisch bei der Anordnung von Elementen in Fahrradrohren ist ferner, dass die Rohre weiterhin wasser- und/oder staubdicht verschlossen sein sollen, bspw. um Korrosion vorzubeugen oder die innerhalb angeordneter Elemente zu schützen. Andererseits ist jedoch ein Zugriff bspw. für die Versorgung mit Strom und/oder Steuerungssignalen notwendig. So kann z. B. ein Ladeanschluss vorgesehen sein, der zugänglich sein muss.

Aufgabe der Erfindung ist es die Fixierung von Elementen innerhalb von Rohren zu verbessern.

Die Lösung der Aufgabe erfolgt erfindungsgemäß durch eine Schraube gemäß Anspruch 1, ein Expandersystem gemäß Anspruch 6, ein Fahrradrohrsystem gemäß Anspruch 13 und eine Fahrradbeleuchtung gemäß Anspruch 15.

Bei der erfindungsgemäßen Schraube handelt es sich insbesondere um eine Expanderschraube, auch als Spreizschraube zu bezeichnen, besonders bevorzugt für ein Fahrradbauteil, wie ein Fahrradrohr. Insbesondere ist die Schraube zur, vorzugsweise klemmenden, Fixierung eines Expanders, bspw. mittels Kraftschlusses innerhalb eines Rohrs ausgeführt. Die Schraube weist einen Schraubenkörper auf. Der Schraubenkörper weist eine kegelförmige Außenfläche auf. Die kegelförmige Außenfläche ist insbesondere derart ausgeführt, dass eine durch die Schraube wirkende Axialkraft über die kegelförmige Außenfläche an eine Spreizrampe eines Expanders übertragen und so eine radiale Spreizkraft erzeugt. Bei der Schraube handelt es sich somit insbesondere um eine axiale Spannschraube zur Erzeugung einer radialen Expansion. Bei der kegelförmigen Außenfläche handelt es sich insbesondere um eine Spreizfläche. Die kegelförmige Außenfläche erstreckt sich zumindest teilweise über die Länge der Schraube und/oder des Schraubenkörpers. Es ist bevorzugt, dass sich die Außenfläche in Richtung der Schraubenspitze hin, vorzugsweise kontinuierlich, verjüngt. Die Schraubenspitze befindet sich gegenüberliegend zum Schraubenkopf. Ferner weist die Schraube eine sich axial durch den Schraubenkörper erstreckende Durchführungsöffnung auf. Die Durchführungsöffnung erstreckt sich insbesondere vollkommen durch die Schraube, sodass es bevorzugt ist, dass die Durchführungsöffnung vom Schraubenkopf zur Schraubenspitze verläuft und besonders bevorzugt beidseitig geöffnet ist. Die Durchführungsöffnung ist insbesondere zur axialen, auch als längs zu bezeichnenden, Durchführung bspw. einer Leitung, z. B. einer Leitung eines Steckverbinders, ausgeführt. Durch die Durchführungsöffnung ist somit insbesondere vorteilhaft ein Zugriff, z. B. zur Versorgung mittels einer Leitung, auf das Innere, vorzugsweise eines Rohrs, möglich. Es ist bevorzugt, dass der Schraubenkopf der Schraube im Wesentlichen den gleichen Durchmesser wie ein mittlerer Bereich des Schraubenkörpers aufweist. Bei der Durchführungsöffnung handelt es sich insbesondere um eine Bohrung, insbesondere eine Durchgangsbohrung, durch die Schraube. Die Schraube besteht insbesondere aus Metall, bspw. Stahl.

In bevorzugter Ausführung weist die Schraube, insbesondere die Durchführungsöffnung, ein Innengewinde auf. Das Innengewinde ist insbesondere im Bereich der Schraubenspitze angeordnet. Vorzugsweise erstreckt sich das Innengewinde teilweise oder vollständig über die Länge der Durchführungsöffnung. Das Innengewinde ist insbesondere zur Verbindung mit einem, vorzugsweise im Inneren eines Rohrs angeordneten, Schraubverbinders ausgeführt. Es ist bevorzugt, dass eine Innenwand der Schraube das Innengewinde aufweist. Bevorzugt beginnt das Innengewinde an der Stirnseite der Schraubenspitze.

In bevorzugter Ausführung weist die Schraube einen innenliegenden Schraubenkopfantrieb, insbesondere einen Innensechskant, auf. Der Schraubenkopfantrieb ist vorzugsweise innerhalb der Durchführungsöffnung ausgeführt. Somit weist bspw. die Durchführungsöffnung im Bereich des Schraubenkopfs eine Innensechskantform auf. Der Schraubenkopfantrieb erstreckt sich insbesondere teilweise über die Länge der Durchführungsöffnung. Es ist bevorzugt, dass der Schraubenkopfantrieb an der Stirnseite des Schraubenkopfs beginnt.

In bevorzugter Ausführung weist der Schraubenkörper im Bereich eines Schraubenkopfs eine umlaufende Nut auf. Die Nut ist insbesondere zur Erleichterung der Entnahme, bspw. dem Herausziehen der Schraube, ausgeführt.

In bevorzugter Ausführung ist innerhalb der Durchführungsöffnung eine Leitung, insbesondere ein, bevorzugt elektrischer, Steckverbinder angeordnet. Bei der Leitung handelt es sich bspw. um ein Kabel. Es ist bevorzugt, dass sich die Leitung vollkommen durch die Schraube erstreckt.

Bei dem erfindungsgemäßen Expandersystem handelt es sich insbesondere um ein Expandersystem für ein Fahrradrohr. Das Expandersystem ist vorzugsweise zur Fixierung von Elementen, bspw. Elektronik, innerhalb eines Fahrradrohrs ausgeführt. Es ist bevorzugt, dass es sich bei dem Expandersystem um ein Abschlusselement für ein Fahrradroh handelt, das das Fahrradrohr, insbesondere wasser- und/oder staubdicht, verschließt. Das Expandersystem weist einen hohlzylinderförmigen Expander auf. Der Expander weist insbesondere eine zentrale Expanderöffnung auf. Der Expander ist vorzugsweise zur kraftschlüssigen Verbindung innerhalb des Rohrs, vorzugsweise Fahrradrohrs, ausgeführt. Es ist bevorzugt, dass der Expander durch Expansion und somit insbesondere radiale Klemmkraft innerhalb des Rohrs fixierbar ist. Der Expander ist vorzugsweise radial expandierbar, insbesondere dehnbar und/oder spreizbar. Bevorzugt weist der Expander einen, insbesondere über die gesamte Länge des Expanders, konstanten Außendurchmesser auf. Das Expandersystem weist ferner eine Schraube mit einem oder mehreren Merkmalen der erfindungsgemäßen Schraube auf. Die Schraube ist insbesondere zur Expansion, vorzugsweise Einstellung der Expansion, des Expanders ausgeführt. Eine Innenwand des Expanders weist eine kegelförmige erste Spreizrampe für die Schraube auf. Die Spreizrampe erstreckt sich teilweise oder vollständig über den Expander. Die erste Spreizrampe ist insbesondere zum, vorzugsweise spreizenden, Zusammenwirken mit der kegelförmigen Außenfläche des Schraubenkörpers ausgeführt. Die Spreizrampe und die kegelförmige Außenfläche des Schraubenkörpers weisen insbesondere einen identischen Winkel und/oder eine identische Steigung, vorzugsweise identischen Betrag der Steigung, auf. Es ist bevorzugt, dass der Winkel der ersten Spreizrampe zu einer, insbesondere zylinderförmigen, Außenfläche und/oder Innenfläche des Expanders dem Winkel der kegelförmigen Außenfläche des Schraubenkörpers zu einer, insbesondere zylinderförmigen, Außenfläche und/oder Innenfläche des Schraubenkörpers entspricht. Die kegelförmige Außenfläche des Schraubenkörpers liegt spreizend an der ersten Spreizrampe an. Spreizend anliegen meint insbesondere, dass eine axiale Kraft der Schraube zu einer radialen Expansion des Expanders führt. Es ist bevorzugt, dass die erste Spreizrampe in einem Endbereich des Expanders angeordnet ist, insbesondere in dem Endbereich an dem die Schraube spreizend anliegt. Die erste Spreizrampe verjüngt sich insbesondere in Richtung der Mitte des Expanders, sodass es bevorzugt ist, dass der Innendurchmesser des Expanders nach außen hin zunimmt. Das Expandersystem weist insbesondere eine zylinderförmige Außenform, vorzugsweise mit einem runden, eckigen oder ovalen Querschnitt, auf.

In bevorzugter Ausführung weist die Außenwand des Expanders eine Dichtungsnut, insbesondere eine O-Ring-Nut, auf. In der Dichtungsnut ist insbesondere eine Dichtung und/oder ein Dämpfer angeordnet. Vorzugsweise ist in der Dichtungsnut eine O-Ring-Dichtung und/oder ein O-Ring-Dämpfer angeordnet. Die Dichtung und/oder der Dämpfer ist vorzugsweise zur Abdichtung und/oder Dämpfung zwischen Expander und einem Rohr ausgeführt innerhalb dessen der Expander anzuordnen ist.

In bevorzugter Ausführung weist die Innenwand des Expanders an der der ersten Spreizrampe gegenüberliegenden Seite eine kegelförmige zweite Spreizrampe auf. Bevorzugt weist die zweite Spreizrampe eine der ersten Spreizrampe entgegengesetzte Steigung auf. Der Betrag der Steigungen der ersten und der zweiten Spreizrampe kann insbesondere gleich oder unterschiedlich sein. Die zweite Spreizrampe verjüngt sich insbesondere in Richtung der Mitte des Expanders, sodass es bevorzugt ist, dass der Innendurchmesser des Expanders nach außen hin zunimmt.

In bevorzugter Ausführung weist das Expandersystem ferner eine Expansionsvorrichtung, vorzugsweise eine Expanderhülse, zum spreizenden Aufspannen auf die zweite Spreizrampe auf. Die Expanderhülse weist insbesondere eine kegelförmige Außenfläche, vorzugsweise zum, bevorzugt spreizenden, Zusammenwirken mit der zweiten Spreizrampe auf. Es ist bevorzugt, dass sich die kegelförmige Außenfläche der Expanderhülse teilweise oder vollständig über die Länge der Expanderhülse erstreckt. Insbesondere ist die kegelförmige Außenfläche der Expanderhülse in einem Endbereich der Expanderhülse angeordnet, wobei es bevorzugt ist, dass die kegelförmige Außenfläche sich nach außen hin verjüngt. Die zweite Spreizrampe und die kegelförmige Außenfläche der Expanderhülse weisen insbesondere einen identischen Winkel und/oder eine identische Steigung, vorzugsweise identischen Betrag der Steigung, auf. Die Expanderhülse weist insbesondere einen im Wesentlichen identischen Außendurchmesser, vorzugsweise maximalen Außendurchmesser, wie der Expander auf. Bei der Expanderhülse handelt es sich insbesondere um eine Kartusche, insbesondere zur darin angeordneten Aufnahme von Elementen, wie bspw. Fahrradelektronik und/oder einer Fahrradleuchtvorrichtung. Es ist bevorzugt, dass die Expanderöffnung durch die Spannvorrichtung und/oder die die Expansionsvorrichtung, bevorzugt die Spannvorrichtung und die Expansionsvorrichtung gemeinsam, insbesondere zu einer Innenseite des Fahrradrohrs, staub- und/oder wasserdicht verschlossen, bspw. abgedichtet ist, ist. Vorzugsweise ist die Spannvorrichtung dicht mit der Expansionsvorrichtung verbunden und/oder die Expansionsvorrichtung ist dicht mit dem Expander verbunden.

In bevorzugter Ausführung weist das Expandersystem ferner eine Spannvorrichtung, insbesondere eine Schraubverbindungsvorrichtung, zum Aufspannen der Schraube auf den Expander auf. Bei der Spannvorrichtung handelt es sich insbesondere um ein Gegenstück für die Schraube. Die Spannvorrichtung und/oder die Schraube ist insbesondere ausgeführt sich, zumindest teilweise, durch den Expander zu erstrecken, um eine Verbindung zwischen Schraube und Spannvorrichtung innerhalb des Expanders umzusetzen. Die Spannvorrichtung ist insbesondere ausgeführt die Schraube, den Expander und die Expanderhülse miteinander, insbesondere axial, zu verspannen. Insbesondere ist die Spannvorrichtung teilweise oder vollständig innerhalb der Expanderhülse angeordnet.

Es ist bevorzugt, dass eine Rotation der Schraube zur einem Aufschrauben der Schraube auf die Spannvorrichtung führt und somit eine axial Kraft wirkt. Die Spannvorrichtung weist insbesondere einen, vorzugsweise elektrischen, Verbinder, besteht insbesondere daraus. Bei dem Verbinder handelt es sich bspw. um einen Schraubverbinder, insbesondere mit einem Außengewinde.

In bevorzugter Ausführung weist die Spannvorrichtung ein mit dem Innengewinde der Schraube zusammenwirkendes Außengewinde auf. Es ist bevorzugt, dass die Spannvorrichtung, bspw. der Schraubverbinder, geschraubt mit der Schraube verbunden ist. Insbesondere ist das Außengewinde der Spannvorrichtung mit dem Innengewinde der Schraube verschraubt.

In bevorzugter Ausführung weist die Spannvorrichtung einen Anschluss zur Ermöglichung einer Verbindung durch die Durchführungsöffnung der Schraube auf. Der Anschluss der Spannvorrichtung ist insbesondere derart angeordnet und/oder ausgeführt, dass eine Leitung, bspw. ein Steckverbinder, innerhalb der Durchführungsöffnung mit dem Anschluss der Spannvorrichtung verbunden werden kann und somit eine Verbindung, bspw. Versorgungsverbindung, herstellbar ist. Der Anschluss weist insbesondere eine Steckdose für einen Steckverbinder auf. Es ist bevorzugt, dass der Anschluss einen elektrischen Kontakt aufweist. Bevorzugt ist es, dass die Spannvorrichtung einen Schraubverbinder mit einem Außengewinde und einen vom dem Außengewinde umgebenen Anschluss, bspw. eine Steckdose, aufweist oder daraus besteht.

In bevorzugter Ausführung ist die Spannvorrichtung, bevorzugt durch Zusammenwirken mit der Schraube, besonders bevorzugt schraubendem Zusammenwirken mit der Schraube, ausgeführt eine axiale Kraft auf die Schraube und/oder auf die Expanderhülse aufzubringen. Die axiale Kraft auf die Schraube ist insbesondere entgegengesetzt zu der axialen Kraft auf die Expanderhülse. Die axiale Kraft auf die Schraube und die axiale Kraft auf die Expanderhülse wirken insbesondere aufeinander zu, vorzugsweise in Richtung Zentrum des Expanders. Die axiale Kraft der Schraube und/oder die axiale Kraft der Expanderhülse wirken insbesondere auf den Expander ein, sodass dieser radial expandiert. Die Spannvorrichtung weist insbesondere einen, vorzugsweise sich radial nach außen erstreckenden, Ansatz zum kraftübertragenden Zusammenwirken mit der Expanderhülse auf. Vorzugsweise spannt die Spannvorrichtung die Schraube und die Expanderhülse beidseitig des Expanders aufeinander zu vor.

Es ist bevorzugt, dass die Schraube einseitig axial an dem Expander anliegt, insbesondere in diesen hineinragt. Vorzugsweise ist die Schraube axial vorgespannt. Ferner ist es bevorzugt, dass die Expanderhülse an der anderen Seite des Expanders anliegt, insbesondere in diesen hineinragt. Vorzugsweise ist die Expanderhülse axial in entgegengesetzter Richtung zur Schraube vorgespannt. Insbesondere liegt die Spannvorrichtung an einer axialen Außenfläche der Expanderhülse an, sodass die Spannvorrichtung die axiale Vorspannung der Expanderhülse umsetzt. Die Spannvorrichtung ragt insbesondere mit dem Außengewinde in den Expander, wobei es bevorzugt ist, dass das Außengewinde, insbesondere innerhalb des Expanders, mit dem Innengewinde der Schraube verbunden ist. Die axiale Vorspannung der Schraube und/oder der Expanderhülse wird insbesondere über die erste und/oder zweite Spreizrampe des Expanders in eine radiale Kraft gewandelt, die zu einer Expansion des Expanders führt.

Das erfindungsgemäße Fahrradrohrsystem weist ein Fahrradrohr auf. Bei dem Fahrradrohr handelt es sich insbesondere um eine Sattelstützenrohr oder ein Steuerrohr oder ein Lenkerrohr. Das Fahrradrohrsystem weist ein innerhalb des Fahrradrohrs angeordnetes Expandersystem mit einem oder mehreren Merkmalen des erfindungsgemäßen Expandersystems auf. Der Expander und/oder die Expanderhülse des Expandersystems weisen insbesondere einen Außendurchmesser, vorzugsweise maximalen Außendurchmesser, auf, der im Wesentlichen dem Innendurchmesser des Fahrradrohrs entspricht.

Das Expandersystem ist innerhalb des Fahrradrohrs radial geklemmt angeordnet. Die radiale Klemmung ist insbesondere über eine Expansion des Expanders umgesetzt. Das Fahrradrohr weist insbesondere Aluminium oder Stahl oder Verbundwerkstoff, bspw. CFK und/oder GFK auf, besteht vorzugsweise daraus. Das Fahrradrohr ist insbesondere lichtdurchlässig ausgeführt. Die Erfindung betrifft insbesondere ferner ein Fahrrad mit mindestens einem erfindungsgemäßen Fahrradrohr. Das Fahrradohr weist insbesondere ein Element, bevorzugt ein Fahrradzubehörelement, besonders bevorzugt ein Elektronikelement auf. Es handelt sich bei dem Element insbesondere um ein Fahrradelektronikelement, also ein Elektronikelement für ein Fahrrad. Bei dem Element handelt es sich insbesondere um ein GPS-Element, bspw. einen GPS-Tracker, und/oder eine Steuereinheit, und/oder eine Batterie, und/oder einen Computer, und/oder eine Sende- und/oder Empfangsvorrichtung, und/oder einen Sensor, bspw. Beschleunigungssensor. Vorzugsweise ist das Element innerhalb der, vorzugsweise als Kartusche ausgeführten, Expanderhülse des Expandersystems angeordnet. Es ist bevorzugt, dass das Element durch die Durchgangsöffnung der Schraube mit elektrischen Signalen versorgt wird, und/oder dass das Fahrradelement durch das Expandersystem in dem Fahrradrohr fixiert ist. Das Expandersyste ist insbesondere in einem Öffnungsbereich des Fahrradrohrs angeordnet.

Es ist bevorzugt, dass durch das Expandersystems derart angeordnet und/oder ausgeführt ist, dass das Fahrradrohr durch das Expandersystems abgeschlossen, insbesondere wasser- und/oder staubdicht verschlossen, vorzugsweise abgedichtet ist. Vorzugsweise wird der Bereich zwischen Expander und Innenwand des Fahrradrohrs durch die Klemmung, insbesondere eine Presspassung, des Expanders abgedichtet. Insbesondere erfolgt die Abdichtung zwischen Expander und Innenwand des Fahrradrohrs ferner oder alternativ durch die Dichtung, insbesondere O-Ring-Dichtung, des Expanders. Eine Abdichtung der Expanderöffnung erfolgt vorzugsweise durch die Spannvorrichtung und/oder die die Expansionsvorrichtung, bevorzugt die Spannvorrichtung und die Expansionsvorrichtung gemeinsam, wobei hierdurch insbesondere eine Abdichtung zu einer Innenseite des Fahrradrohrs umgesetzt ist. Vorzugsweise ist die Spannvorrichtung dicht mit der Expansionsvorrichtung verbunden und/oder die Expansionsvorrichtung ist dicht mit dem Expander verbunden.

Die erfindungsgemäße Fahrradbeleuchtung weist ein Fahrradrohr mit einem oder mehreren Merkmalen des erfindungsgemäßen Fahrradrohrsystems auf. Bei dem Fahrradrohr handelt es sich insbesondere um eine Sattelstützenrohr oder ein Lenkerrohr. Innerhalb des Fahrradrohrs ist eine Leuchtvorrichtung angeordnet. Es ist bevorzugt, dass die Leuchtvorrichtung innerhalb der, vorzugsweise als Kartusche ausgeführten, Expanderhülse des Expandersystems angeordnet ist. Die Leuchtvorrichtung weist insbesondere mindestens eine LED auf. Es ist bevorzugt, dass die Leuchtvorrichtung durch die Durchgangsöffnung der Schraube mit elektrischen Signalen versorgt wird, und/oder dass die Leuchtvorrichtung durch das Expandersystem in dem Fahrradrohr fixiert ist. Es ist bevorzugt, dass die Leuchtvorrichtung derart angeordnet und/oder ausgeführt ist, dass diese durch das, insbesondere aus Verbundwerkstoff, bspw. CFK und/oder GFK bestehende, Fahrradrohr durchscheint.

Nachfolgend wird die Erfindung anhand bevorzugter Ausführungsformen unter Bezugnahme auf die anliegenden Zeichnungen näher erläutert.

Es zeigen:
- Fig. 1: eine perspektivische Ansicht einer bevorzugten Ausführungsform einer erfindungsgemäßen Schraube,
- Fig. 2: die Schraube aus Fig. 1 in einer geschnittenen Darstellung,
- Fig. 3: eine schematisches Schnittansicht einer bevorzugten Ausführungsform eines erfindungsgemäßen Fahrradrohrsystems mit einer bevorzugten Ausführungsform eines erfindungsgemäßen Expandersystems mit der Schraube aus Fig. 1,
- Fig. 4: eine schematische Ansicht einer bevorzugten Ausführungsform einer erfindungsgemäßen Fahrradbeleuchtung mit dem Fahrradrohrsystem aus Fig. 3, und
- Fig. 5: eine Detailansicht gem. V aus Fig. 4.

Ähnliche oder identische Bauteile oder Elemente werden in den Figuren mit den gleichen Bezugszeichen bzw. Variationen davon (z.B. 1001a und 1001b bzw. 1001) identifiziert. Insbesondere zur verbesserten Übersichtlichkeit werden, vorzugsweise bereits identifizierte Elemente nicht in allen Figuren mit Bezugszeichen versehen.

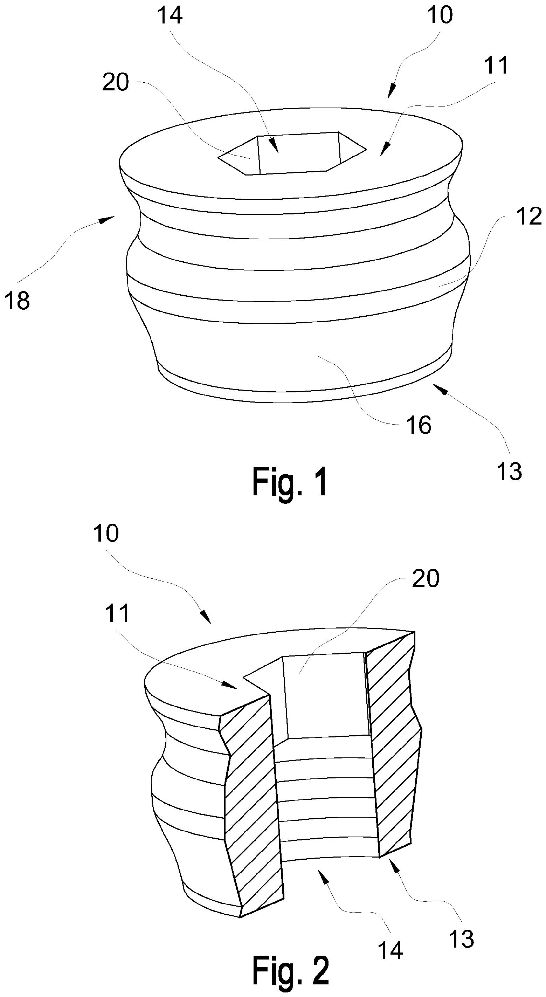

Figur 1 zeigt eine bevorzugte Ausführungsform einer erfindungsgemäßen Schraube 10 in Form einer Expanderschraube. Figur 2 zeigt die Schraube aus Fig. 1 geschnitten.

Die Schraube 10 weist im Wesentlichen eine Zylinderform mit rundem Querschnitt auf.

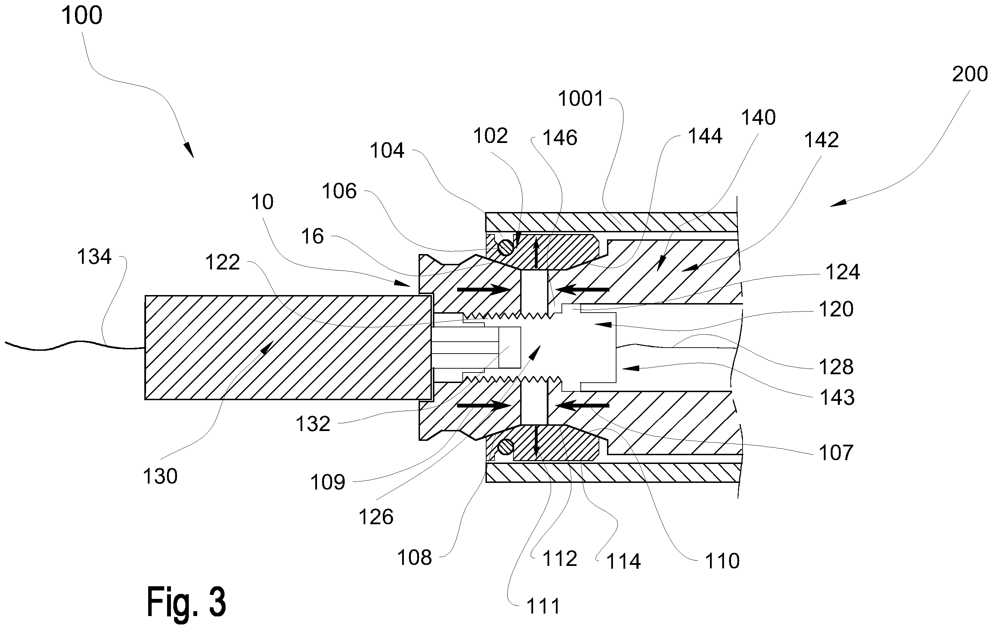

Durch den Schraubenkörper 12 erstreckt sich axial eine Durchführungsöffnung 14, die zwischen Schraubenkopf 11 und Schraubenspitze 13 verläuft und zu beiden Seiten hin offen ist. Die Durchführungsöffnung ist insbesondere zur Durchführung einer Leitung, bspw. der Leitung eines Steckverbinders 130 (vgl. Fig. 3) ausgeführt. Somit kann durch die Schraube hindurch eine Versorgung insbesondere mit elektrischen Signalen, bspw. mit Strom, erfolgen.

Im Bereich des Schraubenkopfs 11 weist die Schraube 10 einen innenliegenden Schraubenkopfantrieb 20, insbesondere einen Innensechskant, auf. Der Schraubenkopfantrieb 20 ist vorzugsweise in der Durchführungsöffnung 14 angeordnet, wobei somit insbesondere die Durchführungsöffnung 14 im Bereich des Schraubenkopfs 11 eine Innensechskantform aufweist. Der Schraubenkopfantrieb 20 verläuft bevorzugt nur über einen Teil der Länge der Durchführungsöffnung 14.

Im Bereich der Schraubenspitze 13 weist die Schraube 10 ein Innengewinde 13 auf. Bevorzugt ist das Innengewinde 13 in der Durchführungsöffnung 14 angeordnet. Das Innengewinde 13 verläuft bevorzugt nur über einen Teil der Länge der Durchführungsöffnung 14.

An der Außenseite weist die Schraube 10 im Bereich der Schraubenspitze 13 eine kegelförmige Außenfläche 16 auf, die sich in Richtung der Schraubenspitze 13 bis zur Schraubenspitze 13 hin verjüngt.

An der Außenseite weist der Schraubenkörper 12 eine Nut 18, insbesondere eine Eingriffsnut, auf, die vorzugsweise vorteilhaft ein Herausziehen der Schraube aus einer Einschraubposition erleichtert.

Figur 3 zeigt eine bevorzugte Ausführungsform eines erfindungsgemäßen Fahrradrohrsystems 1000 mit einer bevorzugten Ausführungsform eines erfindungsgemäßen Expandersystems 100 mit der Schraube 10 aus Fig. 1.

Das Fahrradrohrsystem 1000 weist ein Fahrradrohr 1001 auf, wobei es sich insbesondere um ein Sattelstützrohr handelt.

Innerhalb des Fahrradrohrs 1001 ist eine Kartusche 140 angeordnet, insbesondere darin eingeschoben.

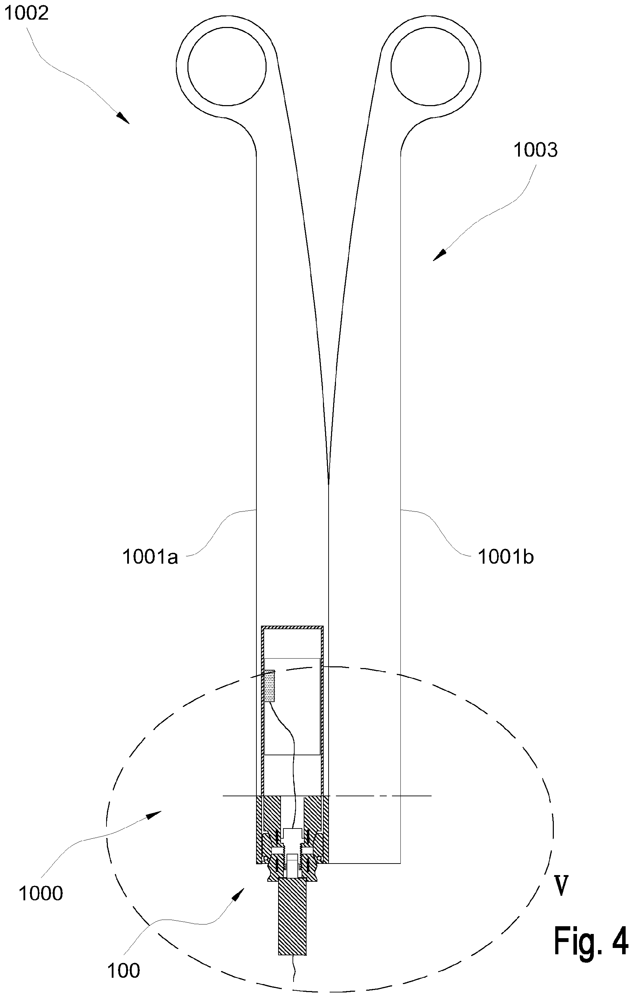

Die Kartusche 140 ist vorzugsweise zur Anordnung von Fahrradelementen, bspw. Fahrradelektronik innerhalb des Fahrradrohrs 1001 ausgeführt (vgl. Fign. 4-5). Zur Aufnahme der Fahrradelementen weist die Kartusche 140 insbesondere einen Aufnahmeraum 142 auf.

In eine Öffnung 143 der Kartusche 140 ist eine Spannvorrichtung 120 in Form einer Schraubverbindungsvorrichtung, eingeschoben, die mit einem radialen Ansatz 124 an einem Vorsprung 146 der Öffnung 143 der Kartusche 140 kraft-übertragend anliegt.

Die Spannvorrichtung 120 weist ein Außengewinde 122 auf, auf das die Schraube 10 aus Figur 1 aufgeschraubt ist.

Zwischen der Schraube 10 und der Kartusche 140 ist ein hohlzylinderförmiger Expander 102 angeordnet. Die Spannvorrichtung 120 verläuft durch den Expander 102. Mittels der Spannvorrichtung 120 wird hierbei die Schraube 10 und die Kartusche in entgegengesetzter Richtung zueinander, jeweils in Richtung des Expanderzentrums vorgespannt. Hierbei ergeben sich entgegengesetzt axiale Vorspannkräfte (dargestellt durch Pfeile 109, 107).

Über die kegelförmige Außenfläche 16 überträgt die Schraube 10 die Vorspannkraft 109 auf eine erste Spreizrampe 108 des Expanders 102. Wiederum wird über die kegelförmige Außenfläche 144 der Kartusche 140 die Vorspannkraft 107 auf eine zweite Spreizrampe 110 des Expanders 102 übertragen. Die axiale Vorspannkräfte 109, 107 führen hierbei zu einer radialen Expansion (dargestellt durch Pfeile 111) des Expanders 102, sodass es zu einem Ausdehnen und/oder Spreizen des Expanders 102 kommt, wobei hierdurch wiederum eine klemmende Fixierung des Expanders 102 und somit des Expandersystems 100 innerhalb des Fahrradrohrs 1001 erfolgt.

Der Expander 102 weist an einer Außenwand 114 eine O-Ring-Nut 104 auf, in der ein dichtender und/oder dämpfender O-Ring 106 angeordnet ist. Durch den O-Ring 106 ist somit insbesondere vorteilhaft eine Dichtung gegen Wasser und/oder Staub, und/oder eine Dämpfung des Expandersystems 100 gegenüber dem Fahrradrohr 1001 umgesetzt.

Im Bereich des Außengewindes 122 weist die Spannvorrichtung 120 einen Anschluss 126 (nicht dargestellt), insbesondere in Form einer Steckerdose auf, der mit einem zum Inneren des Fahrradrohrs 1001 verlaufenden Kabel 128 verbunden ist. Mit Dem Anschluss 126 ist ein von außerhalb des Fahrradrohrs 1001 kommender Steckverbinder 130 mit einem Stecker 132, vorzugsweise strom- und/oder datenübertragend verbunden. An dem Steckerbinder 130 ist vorzugsweise ein mit dem Stecker 132 verbundenes Kabel 134 angeordnet. Die Spannvorrichtung ist insbesondere nicht geschnitten dargestellt.

Aufgrund der Durchgangsöffnung 14 durch die Schraube 10 kann insbesondere vorteilhaft ein Zugriff, bevorzugt eine Versorgung, besonders bevorzugt eine Strom- und/oder Datenversorgung, in das Innere des Fahrradrohrs 1001 erfolgen. Hierbei erfolgt über den Steckerbinder 130 und den Anschluss 126 durch die Durchgangsöffnung 14 sowie durch den Expander 102 und insbesondere durch die Kartusche 140 eine Versorgung, insbesondere eine Strom- und/oder Datenversorgung.

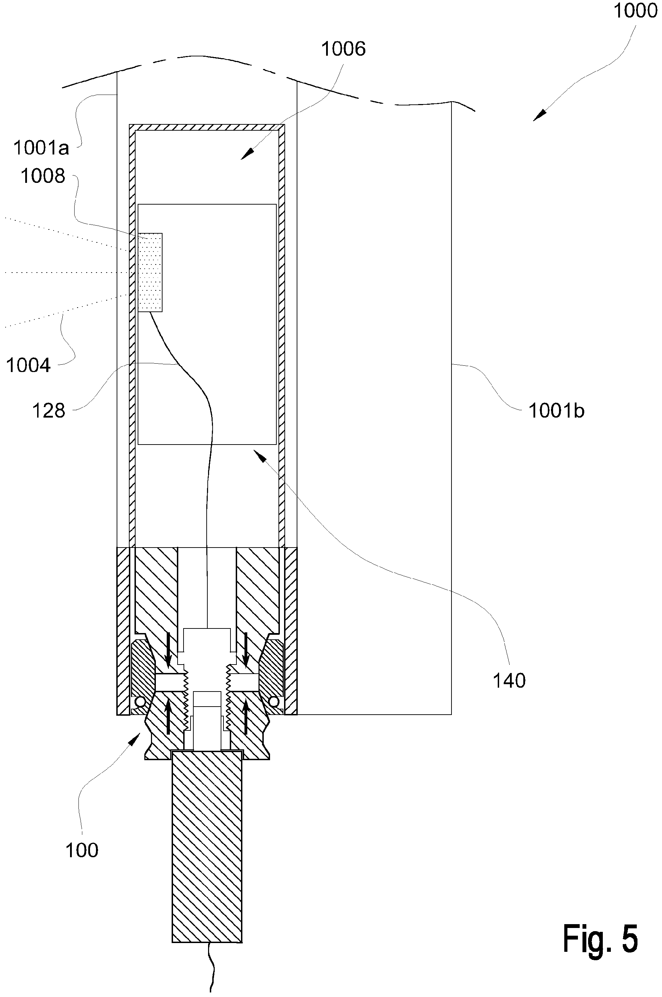

Figur 4 zeigt eine bevorzugte Ausführungsform einer erfindungsgemäßen Fahrradbeleuchtung 1002 mit dem Fahrradrohrsystem 1000 aus Figur 3. Figur 5 zeigt eine Detailansicht gem. V.

Dargestellt handelt es sich bei dem Fahrradrohr 1001a des Fahrradrohrsystems 1000 um ein Sattelstützrohr einer Sattelstütze 1003 mit zwei Sattelstützrohren 1001a, 1001b.

Innerhalb der Kartusche 140 des Expandersystems 100 des Fahrradrohrsystem 1000 ist eine Leuchtvorrichtung 1006 mit einer LED 1008 angeordnet. Die LED 1008 strahlt dabei durch das, insbesondere lichtdurchlässige Fahrradrohr 1001a, sodass eine Beleuchtung (dargestellt durch Strichlinien 1004) eines Fahrrads umgesetzt ist. Das Fahrradrohr 1001a ist insbesondere aus Verbundwerkstoff, bspw. CFK und/oder GFK, hergestellt.

Die Leuchtvorrichtung 1006, insbesondere die LED 1008, ist mit dem Kabel 128 der Spannvorrichtung 120 zur Strom- und/oder Datenübertragung verbunden.

Über das erfindungsgemäße Expandersystem 100 kann somit insbesondere vorteilhaft ein Fahrradelement, wie bspw. Fahrradelektronik, innerhalb eines Fahrradrohrs 1001 fixiert und/oder mit elektrischen Signalen, wie Strom und/oder Daten, versorgt werden.

## Patentansprüche

1. Schraube (10), insbesondere Expanderschraube, mit
einem Schraubenkörper (12), und
einer sich axial durch den Schraubenkörper (12) erstreckenden Durchführungsöffnung (14),
wobei der Schraubenkörper (12) eine kegelförmige Außenfläche (16) aufweist.

2. Schraube (10) nach Anspruch 1, **dadurch gekennzeichnet, dass** die Schraube (10), insbesondere die Durchführungsöffnung (14), ein Innengewinde (13) aufweist.

3. Schraube (10) nach Anspruch 1 oder 2, **dadurch gekennzeichnet, dass** die Schraube (10) einen innenliegenden Schraubenkopfantrieb, insbesondere einen Innensechskant, aufweist.

4. Schraube (10) nach einem der Ansprüche 1-3, **dadurch gekennzeichnet, dass** der Schraubenkörper (12) im Bereich eines Schraubenkopfs eine umlaufende Nut aufweist.

5. Schraube (10) nach einem der Ansprüche 1-4, **gekennzeichnet durch** eine innerhalb der Durchführungsöffnung (14) angeordnete Leitung, insbesondere einen Steckverbinder (130).

6. Expandersystem (100) mit
einem hohlzylinderförmigen Expander (102), und
einer Schraube (10) nach einem der Ansprüche 1-5,
wobei eine Innenwand des Expanders (102) eine kegelförmige erste Spreizrampe (108) für die Schraube (10) aufweist, und
wobei die kegelförmige Außenfläche (16) des Schraubenkörpers (12) spreizend an der ersten Spreizrampe (108) anliegt.

7. Expandersystem (100) nach Anspruch 6, **dadurch gekennzeichnet, dass** eine Außenwand des Expanders (102) eine Dichtungsnut, insbesondere eine O-Ring-Nut aufweist.

8. Expandersystem (100) nach Anspruch 6 oder 7, **dadurch gekennzeichnet, dass** die Innenwand des Expanders (102) an der der ersten Spreizrampe (108) gegenüberliegenden Seite eine kegelförmige zweite Spreizrampe (110) aufweist.

9. Expandersystem (100) nach Anspruch 8, **dadurch gekennzeichnet, dass** das Expandersystem (100) ferner eine Expandervorrichtung, insbesondere eine Expanderhülse, zum spreizenden Aufspannen auf die zweite Spreizrampe (110) aufweist.

10. Expandersystem (100) nach einem der Ansprüche 6-9, **dadurch gekennzeichnet, dass** das Expandersystem (100) ferner eine Spannvorrichtung (120), insbesondere eine Schraubverbindungsvorrichtung, zum Aufspannen der Schraube (10) auf den Expander (102) aufweist.

11. Expandersystem (100) nach Anspruch 10, **dadurch gekennzeichnet, dass** die Spannvorrichtung (120) ein mit dem Innengewinde (13) der Schraube (10) zusammenwirkendes Außengewinde aufweist.

12. Expandersystem (100) nach Anspruch 10 oder 11, **dadurch gekennzeichnet, dass** die Spannvorrichtung (120) einen, insbesondere einen elektrischen Kontakt aufweisenden, Anschluss zur Ermöglichung einer Verbindung durch die Durchführungsöffnung (14) der Schraube (10) aufweist.

13. Fahrradrohrsystem (1000), mit
einem Fahrradrohr (1001), bevorzugt einer Sattelstütze (1003),
einem Expandersystem (100) nach einem der Ansprüche 6-12,
wobei das Expandersystem (100) innerhalb des Fahrradrohrs (1001) radial geklemmt angeordnet ist.

14. Fahrradrohrsystem (1000) nach Anspruch 13, **gekennzeichnet durch** ein Fahrradelement, insbesondere ein Fahrradelektronikelement, wobei das Fahrradelement innerhalb des Fahrradrohrs (1001) angeordnet ist, und wobei das Fahrradelement durch die Durchgangsöffnung der Schraube (10) mit elektrischen Signalen versorgt wird, und/oder
wobei das Fahrradelement durch das Expandersystem (100) in dem Fahrradrohr (1001) fixiert ist.

15. Fahrradbeleuchtung (1002) mit
einem Fahrradrohrsystem (1000) nach Anspruch 13 oder 14, und
einer innerhalb des Fahrradrohrs (1001) angeordneten Leuchtvorrichtung (1006),
wobei die Leuchtvorrichtung (1006) durch die Durchgangsöffnung der Schraube (10) mit elektrischen Signalen versorgt wird, und/oder
wobei die Leuchtvorrichtung (1006) durch das Expandersystem (100) in dem Fahrradrohr (1001) fixiert ist.
